Europäisches Patentamt

European Patent Office

Office européen des brevets

(11) Publication number: **0 056 402**
**B1**

(12) EUROPEAN PATENT SPECIFICATION

(45) Date of publication of patent specification: 05.10.88

(51) Int. Cl.⁴: **H 04 N 11/06**

(21) Application number: **81902150.2**

(22) Date of filing: **20.07.81**

(86) International application number:
**PCT/US81/00968**

(87) International publication number:
**WO 82/00396 04.02.82 Gazette 82/04**

(54) ADAPTIVE RECONSTRUCTION OF INFORMATION SIGNALS IN A PLURAL CHANNEL SYSTEM.

(30) Priority: 23.07.80 US 171379
29.06.81 US 278447

(43) Date of publication of application:
28.07.82 Bulletin 82/30

(45) Publication of the grant of the patent:
05.10.88 Bulletin 88/40

(84) Designated Contracting States:
DE FR GB

(56) References cited:
FR-A-2 320 017
GB-A-2 069 294
US-A-3 462 547
US-A-4 204 227
US-A-4 217 609
US-A-4 227 204

S.M.P.T.E. JOURNAL, vol. 89, no. 3, March
1980, pages 188-191, Scardale, New York, US;
D. NASSE: "Necessity and possibility of
separate-components digital video recording"

(73) Proprietor: RCA CORPORATION
201 Washington Road
Princeton, NJ 08540 (US)

(72) Inventor: DISCHERT, Robert Adams
16 Bloomer Drive
Burlington, NJ 08106 (US)
Inventor: REITMEIER, Glenn Arthur
3 Metekunk Drive
Trenton, NJ 08638 (US)

(74) Representative: Smith, Thomas Ian Macdonald
et al
RCA International Limited Burdett House
15-16 Buckingham Street
London WC2N 6DU (GB)

## Description

The present invention relates to transmission systems, and more particularly, to plural channel color television systems with different channel bandwidths.

A first aspect of the present invention relates to reducing the required system data rate without sacrificing picture quality.

FR—A—2475833 and FR—A—2320017 describe a method of data rate reduction for digital video systems by deleting, i.e., not transmitting, every other picture sample, and transmitting in place of the deleted samples, "steering" or control bits which enable the deleted samples to be reconstructed from the nondeleted (transmitted) samples. In particular, the steering or control bits contain information as to which of the average of pairs of undeleted samples surrounding the deleted sample is a closest match to the deleted sample. Thus, at the receiver the average of the pair that is a closest match to the deleted sample is substituted for the deleted sample. The present invention contemplates a video signal including a plurality of component signals, such as red, blue and green color components of a television signal. Although a system according to the aforementioned application, when used with a plural channel system having multiple signal components, will have a lower data rate than a conventional system, distinct sets of steering bits would be required for each channel in order to reconstruct the deleted samples of each channel.

It is therefore desirable to reduce still further the required data rate and amount of hardware needed.

A second aspect of the present invention relates to a television system which has a wide bandwidth luminance channel and narrow-bandwidth chroma channels. For example, in a proposed television system, the luminance channel is sampled at four times the chroma subcarrier frequency, while two chroma channels are sampled at only twice said frequency to conserve bandwidth. This system is known as the 4:2:2 system. In accordance with the Sampling Theorem (developed by Nyquist) a bandwidth limited analog signal can be completely characterized by sampling (or modulating) at a rate (commonly called the Nyquist rate) which is at least twice the highest frequency component of the analog signal. Sampling at less than the Nyquist rate results in alias signals (beats) occurring in the recovered sampled signal. In the 4:2:2 system the color signal resolution is limited to one half the luminance signal resolution (by bandwidth limiting) to avoid aliasing in the narrow-bandwidth color channels.

It is therefore desirable in accordance with this second aspect of the invention to have a system where all channels have a more nearly equal resolution without increasing the bandwidth of the channel through which they pass.

In these and other aspects of the invention as set forth in the appended claims, at least one of a plurality of information signals representing correlated information such as respective components of a color video signal, is processed to provide a control signal indicative of a criterion for optimum resolution or reconstruction and this control signal is used, or is transmitted with the information signals to be used, in processing at least one other of the information signals in accordance with that criterion.

In the drawings:

Figure 1 shows a diagram useful in explaining three sampled line-scan rasters which all have distinct sets of steering bits;

Figure 2 is a block diagram of a transmitter in accordance with the first aspect of the present invention;

Figure 3 shows portions of sampled rasters of three channels, wherein the transmitted steering bits of only a single channel are located in place of the undisplayed deleted samples;

Figure 4 is a block diagram of a receiver in accordance with the first aspect of the present invention;

Figure 5 is a block diagram of a transmission system including a receiver as in Figure 4 together with an alternate embodiment of a transmitter;

Figure 6 illustrates a block diagram of an encoder for encoding samples of a video signal and control signals in accordance with an embodiment of the first aspect of the invention;

Figure 7 illustrates a block diagram of a decoder for decoding information encoded by the apparatus of Figure 6;

Figure 8 shows a block diagram of a minimum-error logic circuit used in Figure 6;

Figures 9, 10, 11 and 12 illustrate block diagrams of filters used in Figures 6 and 7;

Figure 13 shows a block diagram of a digital delay line used in Figures 6, 7, 9, 10, 11 and 12.

Figure 14 shows a block diagram of a majority logic circuit used in Figure 2; and

Figure 15 shows a block diagram of a steering bit generator that is used in place of the majority logic circuit used in Figure 2.

Figure 16 shows an encoder in accordance with the second aspect of the invention;

Figure 17 shows sample patterns on a scanning raster; and

Figure 18 shows a decoder in accordance with the second aspect of the invention.

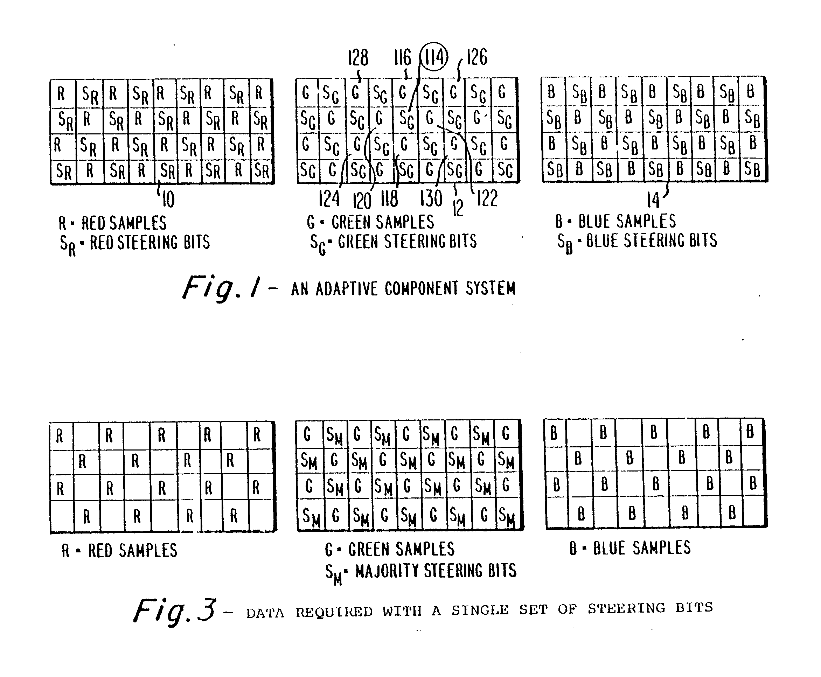

Referring to the drawing, Figure 1 shows portions of sampled line scanned rasters 10, 12 and 14 respectively and associated signals representative of the red, green and blue color components of a scene. The symbols R, G, and B, indicate red, green and blue picture samples of the rasters 10, 12 and 14 that will be transmitted. These transmitted samples occur at a 7.16 MHz rate in a preferred embodiment, which is twice the NTSC color subcarrier frequency. Thus, a sample occurs every 140 nanoseconds. The letter S with appropriate subscript represents steering bits that would be transmitted in place of deleted samples of

2

picture elements if the system of the prior U.S. application is used for each channel. The steering bits also occur at a 7.16 MHz rate. It will be noted that every other sample of the video signal originally sampled at 14.32 MHz rate has been deleted in each raster and that the position of the deleted samples in the raster alternates in a position from horizontal line to horizontal line. Therefore, the position of the steering bits also alternates from line to line. This alternation enables the steering bits to contain information as to which of the surrounding four pairs of transmitted samples is the closest or best match to a particular deleted sample.

Additionally, this best match information indicates a raster direction that has the least amount of change (least resolution). In Figure 1, for the particular deleted sample designated 114 in the green field, the average of the vertically adjacent samples 116 and 118, the average of the horizontally adjacent samples 120 and 122, the average of the left diagonal samples 128 and 130, or the average of the right diagonal samples 126 and 124, are compared with sample 114, and the results of the comparisons are evaluated by a logic circuit to determine which average of the surrounding samples to be transmitted is the best approximation to sample 114, which is not to be transmitted. In place of deleted sample 114, a set of steering bits is added to the bits carrying information as to the amplitude of previous transmitted sample 120. Since in the above example there are four choices, the steering word can comprise as few as two bits, and since they are replacing a deleted sample of eight bits, there is a net reduction in the amount of information being transmitted (see the prior application for a more detailed explanation). The same concept is used for the red and blue fields to generate steering bits, for a total of three sets of steering bits.

The first aspect of the present invention uses a single set of steering bits to control the steering in all three channels. This is possible because the three channels of components of a television signal, e.g., R, G, B, or Y, I, Q, are normally highly redundant when representing a typical scene, and therefore one set of steering bits will suffice to indicate the direction of resolution in all three. That is, all three channels will not ordinarily have edges in different directions at the same time. Thus, the edges will normally occur in the same direction.

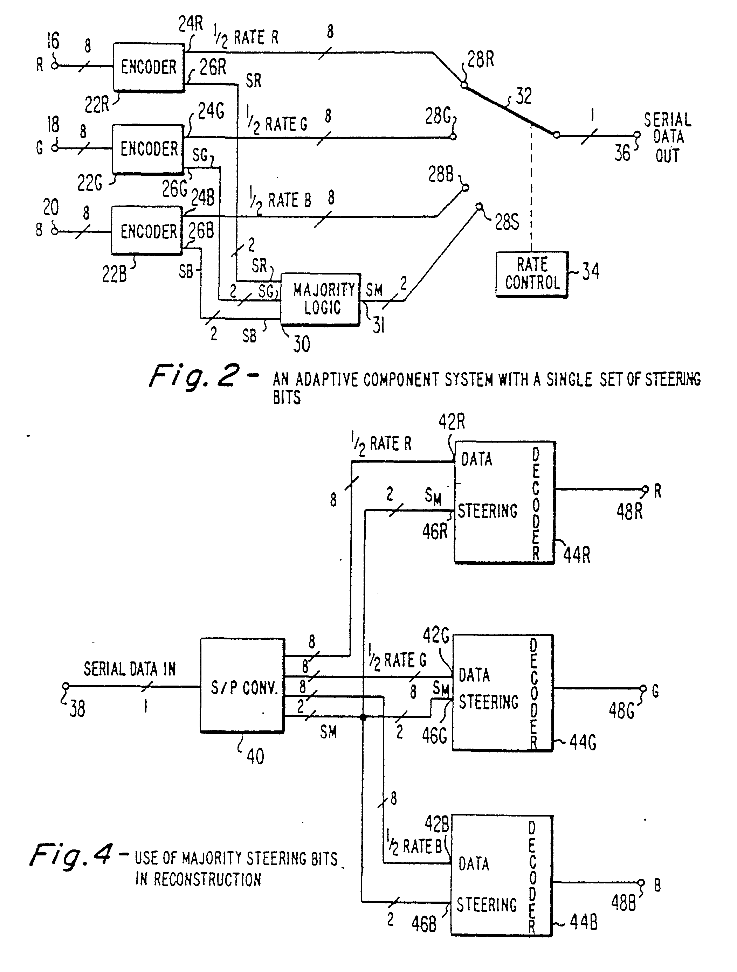

Figure 2 shows a block diagram of a transmitter for carrying out this concept. Red, green and blue color representative digital component signals of a single television raster scan signal are received at input terminals 16, 18 and 20 respectively. They are applied to encoders 22R, 22G, and 22B respectively. Outputs 24R, 24G, and 24B supply eight parallel digital bits representing every other sample of the respective input signals to switch contacts 28R, 28G, and 28B respectively for a time period until the next sample is present at outputs 24R, 24G, and 24B. For example, if the signals at inputs 16, 18 and 20 occur at 70 nanosecond intervals, the signals at outputs 24R, 26G, and 24B, are each simultaneously present for 140 nanoseconds. Outputs 26R, 26G, and 26B each provide two steering bits in place of the samples that are not present at outputs 24R, 26G, and 24B respectively. The steering bits are applied to a majority logic circuit 30. Majority logic circuit 30 is a means of deciding, based on majority voting of the three sets of steering bits, which of the three sets of steering bits will best represent all three channels during reconstruction at the receiver. Thus, if any two or more sets of steering bits are the same, one of these sets will be transmitted as the majority steering bits called "Sm" at output 31 and are present for 140 nanoseconds. Otherwise, the bits from a single component signal will be selected. Since green is the largest component of a luminance signal, it is preferable to select its steering bits for transmission. Alternately, steering bits may be chosen from the component signal having the largest amplitude. The selected steering bits are applied to two-bit input contact 28S of switch 32. Rate control circuit 34 sequentially moves switch 32 among the contacts 28 so that at one-bit output 36 of the transmitted samples from each of the color component channels are serially supplied along with the single set of steering bits from majority logic circuit 30. Since there are a total of 26 (3 channels×8 bits+1 channel×2 bits) contacts 28, switch 32 must cycle at a rate 26 times that of the data rate of the signals at outputs 24R, 24G, 24B of the encoders 22R, 22G, and 22B. With this system, the samples and data can be represented as shown in Figure 3 where the number of steering bits is reduced to 1/3 of that needed for fully independent steering at each channel as shown in Figure 1.

The picture is reconstructed exactly as in the independent channel case of the prior U.S. patent application except that the majority steering bits are used to steer all three channels as is shown in the receiver of Figure 4. The transmitted data is received at terminal 38 and applied to a serial-to-parallel converter 40 which simultaneously applies the red transmitted samples to input 42R of red decoder 44R, the green transmitted samples to input 42G of green decoder 44G, and the blue transmitted samples to input 42B of blue decoder 44B. Further, the majority steering bits are simultaneously applied in parallel to inputs 46R, 46G, and 46B of the decoders 44R, 44G, and 44B respectively. Decoder 44R provides at output terminal 48R, the reconstructed digital red signal; the decoder 44G supplies at output terminal 48G, the reconstructed digital green signal; and the decoder 44B applies an output terminal 48B, the reconstructed digital blue signal, all of the reconstruction having been done using majority steering bits.

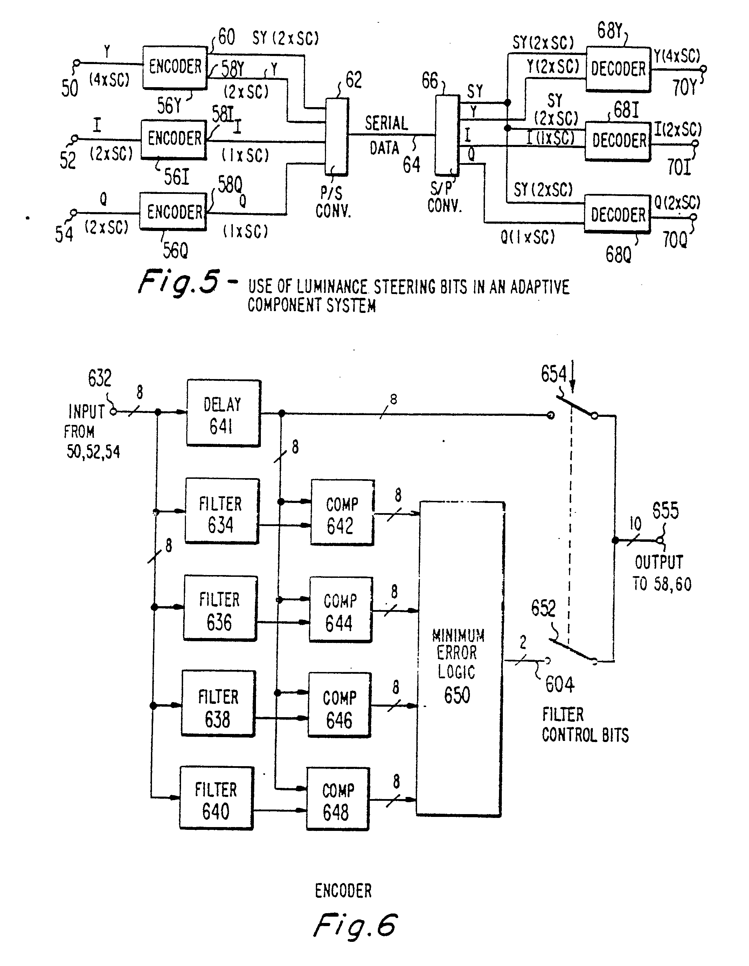

The same concept of using a single set of steering bits may also be used in a luminance (Y) and two color component (I, Q; R—Y, B—Y) system with one slight difference. The Y channel will have a higher data rate and consequently a higher bandwidth than either the I or Q channels. Hence, since the luminance channel Y will have more resolution than the color channels I and Q, the direction of reconstruction indicated for this channel will be adequate for the lower bandwidth channels. Therefore, steering bits derived only from the Y channel are used to reconstruct the luminance as well as the color component channels. As shown in Figure 5, Y, I and Q digital signals are received at input terminals 50, 52 and 54. In a particular embodiment, the Y signal comprises samples occurring at four times the color subcarrier frequency, while the I and Q signals comprise samples occurring at only twice the subcarrier frequency. The signals are applied to encoders 56Y, 56I and 56Q. Samples occurring at two times the subcarrier frequency are provided by the encoders at output 58Y and at the subcarrier frequency at outputs 58I and 58Q. Encoder 56Y also provides steering bits at output 60. These steering bits occur at twice the subcarrier rate. All of these signals are applied to a parallel-to-series converter 62 where they are sequentially sent as serial data over a transmission path 64 to a sterial-to-parallel converter 66. Serial-to-parallel converter 66 simultaneously provides steering bits from the Y signal to decoders 68Y, 68I and 68Q. It also provides the Y signal to decoder 68Y, the I signal to decoder 68I, and the Q signal to decoder 68Q. The decoder 68Y provides a reconstructed digital Y signal occurring at four times the subcarrier frequency at output terminal 70Y, the decoder 68I provides a reconstructed digital I signal which occurs at two times the subcarrier frequency at output terminal 70I, and the decoder 68Q provides a reconstructed digital Q signal at output terminal 70Q which occurs at two times the subcarrier frequency.

Figure 6 illustrates an encoder for use in Figures 2 and 5. An input 632 receives the digital video signal having samples occurring, in a particular embodiment, at 14.32 MHz with 8 bits per sample. The 8 bits of each sample are applied to a delay line 641 and to filters 634, 636, 638 and 640. These filters are used to provide the average of the surrounding samples. By "average" is meant adding together the signal values represented by each of the two 8-bit samples and then dividing the resulting sum by two. As can be determined by inspection of Figure 1, sample points 128 and 130 are spaced in time by two horizontal lines and four signal sampling intervals. In the NTSC system, this corresponds to approximately 127 microseconds plus 280 nanoseconds.

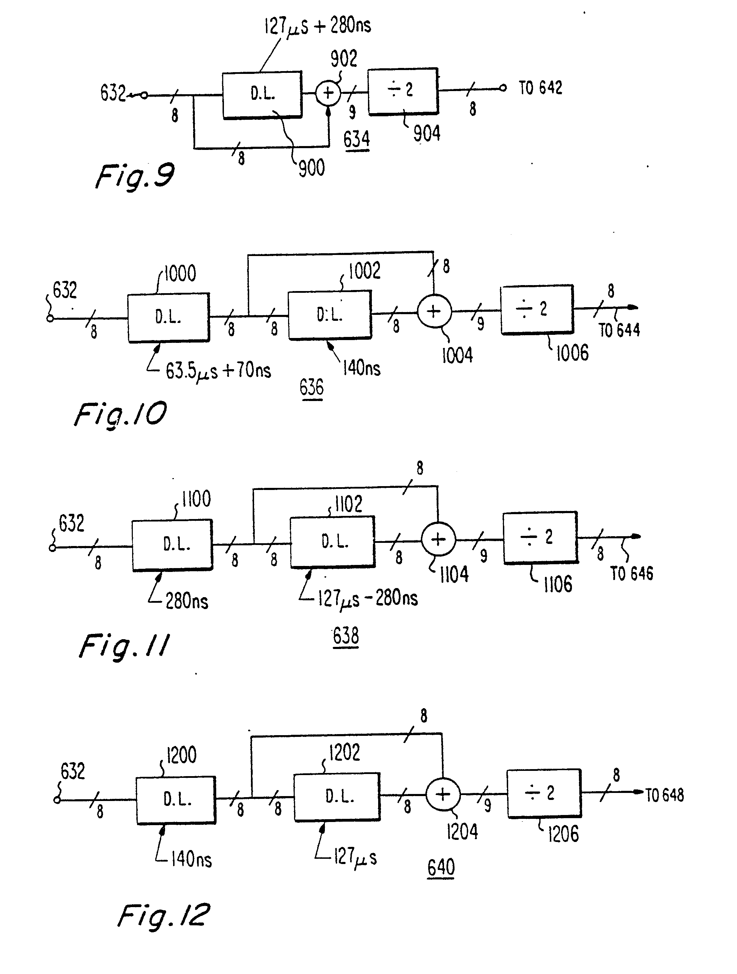

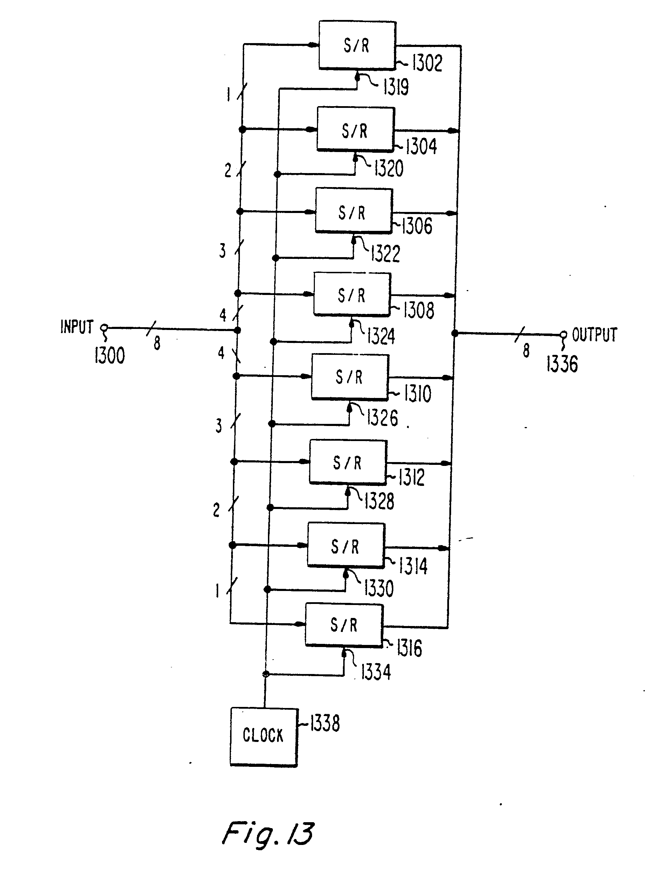

Figure 9 illustrates the details of filter 634 which comprises a digital delay line 900 having a delay of 127 microseconds plus 280 nanoseconds coupled between input terminals 632 and an input terminal of a digital adder 902. Undelayed signals from terminal 632 also are coupled to a second input terminal of adder 902. The digital sum of these signals, corresponding to the video signals at sample points 128 and 130, is obtained at the output terminal of adder 902 and coupled to an input terminal of a digital divider 904. Divider 904 divides this summed signal by two to provide at its output terminal an 8-bit parallel signal representing the average signal of sample points 128 and 130. This averaged signal is coupled to an input terminal of a comparator 642 in Figure 6. Delay line 641 also comprises an 8-bit digital delay line and has a delay of about 63.5 microseconds plus 140 nanoseconds. This time is equal to one-half of the total delay of delay line 900 of figure 634, and delays the video at sample point 114 of Figure 1 that is not to be transmitted so it will be in time coincidence with the averaged signal from filter 634 so the two signals can be compared by comparator 642. Filter 636 supplies the average of points 120 and 122 (a "horizontal" average). It comprises an 8-bit wide digital delay line 1002 in Figure 10 having a delay of about 140 nanoseconds. The input (undelayed) and output (delayed) signals of this delay line are averaged by adder 1004 and divider 1006. An additional equalizing delay of one line plus 70 nanoseconds to compensate for the delay line 641 is provided by delay line 1000 within filter 636. The output signal of filter 636 from divider 1006 is supplied to a comparator 644 in Figure 6. Filter 638 supplies the average of diagonal points 124 and 126 (a "second diagonal" average). It comprises an 8-bit digital delay line 1102 in Figure 11 having a delay of two horizontal lines minus 280 nanoseconds. The delayed and undelayed signals are averaged by adder 1104 and divider 1106, while the digital signal from input 632 is first delay equalized by a 280 nanosecond delay line 1100. The output signal from divider 1106 is applied to a comparator 636 in Figure 6. Lastly, filter 640 supplies the average of points 116 and 118 (a "vertical" average). It comprises an 8-bit digital delay line 1202 in Figure 12 having a delay of two horizontal lines. The delayed and undelayed signals are averaged by adder 1204 and divider 1206, while the digital signal from input 632 is first delay equalized by a 140 nanosecond delay line 1200. The output signal from divider 1206 is applied to a comparator 648 in Figure 6.

Figure 13 shows an 8-bit wide delay lines for use in the filters 634, 636, 638 and 640 and delay 641. It comprises eight shift registers 1302, 1304, 1306, 1308, 1310, 1312, 1314 and 1316, each of which receives one bit of the 8-bits simultaneously present at input 1300. The bits are shifted within the registers under the control of a clock signal from clock 1338 coupled to shift inputs 1318, 1320, 1322, 1324, 1326, 1328, 1330, and 1334. The number of stages of the shift registers are chosen to achieve the desired delay. The outputs of the shift registers are coupled to 8-bit parallel output 1336. Comparators 642, 644, 646 and 648 each comprise an 8-bit subtractor that also receives the original 8-bit samples through delay line 641 in addition to the outputs of filters 634, 636, 638 and 640 respectively. The respective two signals in each comparator are subtracted and then the absolute value is taken of the resulting difference. The comparators apply absolute value signals to a minimum error logic circuit 650.

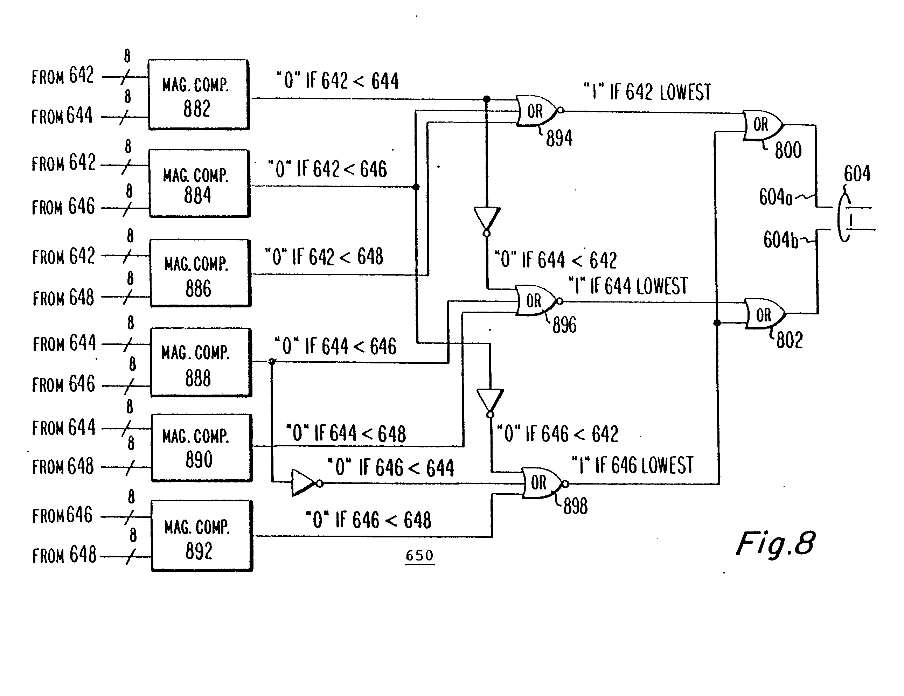

As shown in Figure 8, minimum error logic circuit 650 comprises 6 magnitude comparators 882, 884, 886, 888, 890 and 892, each of which receives two 8-bit numbers from different pairs of the output signals of comparators 642, 644, 646 and 648 and supplies at its respective output a one-bit logic level indication to indicate which of the two respective input numbers is smaller. It should be noted that there are only six possible combinations of four numbers taken in pairs, thus giving rise to the six magnitude comparators. It is only necessary to look at three of the magnitude comparator outputs to determine if a specific magnitude comparator input is the lowest. Thus NOR gates 894, 896, and 898 are used to detect if the output signal from comparators 642, 644, and 646 respectively are the lowest. If none are the lowest, the output signal from 648 is assumed to be the lowest which will be true, or none will be lowest, i.e., they are all equal, in which latter case the output signal from any comparator will do. The output signals from gates 894, 896, and 898 are coded by OR gates 800 and 802 into the 2-bit control signal on bus 604 in accordance with the following truth table:

| Line No. | Lowest signal | | | |
|---|---|---|---|---|
| | 642 | 644 | 646 | 648 |
| 604a | 1 | 0 | 1 | 0 |
| 604b | 0 | 1 | 1 | 0 |

The output of minimum error logic circuit 650 comprises two bits in accordance with the above table which indicate which of the pairs of samples of adjacent points is the closest match, i.e., represents which direction has the least change of the video signal around the sample point 114. This two-bit signal makes up the control signal indicating which of the transmitted video sample signals most closely represents the untransmitted video signal so that complete video information can be obtained upon decoding. The two central bits are applied to a switch 652 in Figure 6, which is a two-bit switch operated in synchronization with an 8-bit switch 654 in Figure 6 at 7.16 MHz switching rate. This switching rate, since it is 14.32 MHz divided by 2, causes switch 654 to pass or transmit only every other 8-bit sample. The 2 control bits from logic circuit 650, that indicate which of the adjacent samples are to be used in reconstructing the untransmitted points, are passed by switch 652, and together with the 8 bits simultaneously passed by switch 654 representing a transmitted point, form a 10-bit parallel word at 10-bit parallel output 655.

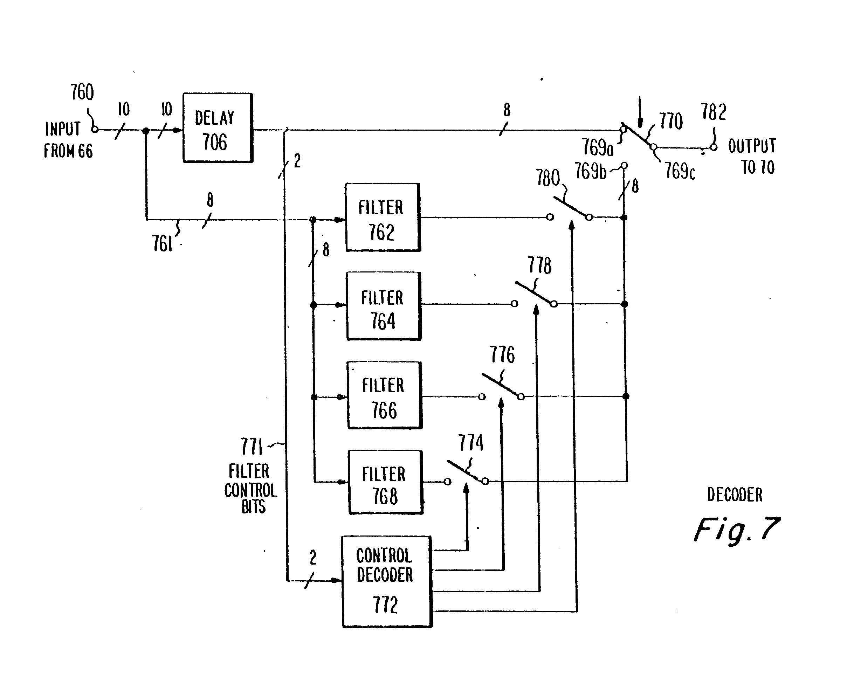

Figure 7 shows a decoder for use in the present invention. The 10-bit parallel signal is received at input 760. The 8 bits representing a sample of a picture point are applied by 8-bit bus 761 to filters 762, 764, 766 and 768, the internal construction of which is the same as filters 634, 636, 638 and 640 respectively. The same 8 bits are also applied to contact 769a of 8-bit switch 770 through delay line 706 that has the same delay as delay line 641 and which compensates for the delay through filters 762, 764, 766, and 768. The two control bits are brought out on 2-bit bus 771 and applied to control decoder 772 for control of switches 774, 776, 778, and 780. This decoder comprises a one-of-four decoder, such as integrated circuit No. SN 74S139, manufactured by Texas Instruments, that takes the two control bits and gives a 4-bit parallel output, only one of which will be high. The 4 parallel bits are applied to the switches 774, 776, 778 and 780 respectively. Since only one of the outputs of control decoder 772 will be high, only one of the switches 774, 776, 778 and 780 will be closed at any one time at a 7.16 MHz rate. This applies the signal from that one of the filters 762, 764, 766, and 768 which is the closest match for a missing sample to contact 769b of switch 770. Switch 770 is switched at a 14.32 MHz rate between its two inputs 769a and 769b, and thus alternately supplies a sample point of the original picture and a reconstructed 8-bit signal to its output 769c and to decoder output 782. Since each of the signals occurs at a 7.16 MHz rate, the resulting signal from output 769c of switch 770 is at 14.32 MHz.

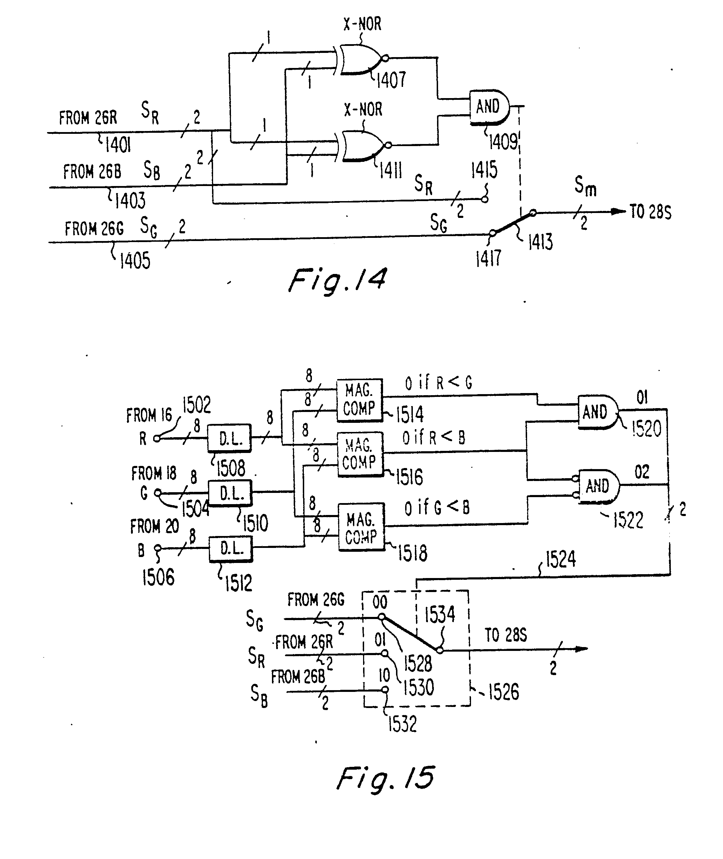

Figure 14 shows a block diagram of a majority logic circuit 30 used in Figure 2. In general, it is desired to use the following rules in order to select the steering bits. If the red, blue and green sets of steering bits are all the same, then any one of the sets can be used, and in this embodiment the red set is used. If red and green or blue and green are the same, then the green set is used. If red and blue are the same, then either red or blue can be used, and in this embodiment red is used. If all steering bits are different, the green set is used.

As shown in Figure 14, red, blue and green steering bits ($S_R$, $S_B$, and $S_G$) are received on two-bit lines 1401, 1403 and 1405 respectively from encoder outputs 26R, 26B, 26G respectively. The first pair of corresponding bits of the red and blue steering bits are applied to respective inputs of exclusive-NOR gate 1407. Gate 1407 supplies a high signal to one input of AND gate 1409, if both of its inputs are the same. The remaining second pair of corresponding bits of the red and blue sets of steering bits are applied to respective inputs of exclusive-NOR gate 1411. Gate 1411 supplies a high signal to the other input of AND gate 1409, if both of its inputs are high. Gate 1409 supplies a high signal if both its inputs are high, i.e., there is a match between both corresponding pairs of the red and blue steering bits. The high signal from gate 1409 controls two-bit switch 1413 so its wiper arm is contacting contact 1415 (the position not shown in Figure 14) to supply to input 28S of Figure 2 the red steering bits for use as majority steering bits. If there is no match for either of the corresponding pairs, then the output signals from either or both of gates 1407 and 1411 is low and hence the output signal from gate 1409 is also low. Switch 1413 then is in the position shown in Figure 14, i.e., contacting contact 1417, and the green steering bits are supplied as the majority steering bits. Thus, the rules described above are carried out.

Figure 15 shows a block diagram of a circuit used instead of majority logic circuit 30 of Figure 2. The circuit of Figure 15 provides steering bits from whichever of signals R, G or B has the greatest amplitude. Input terminals 1502, 1504, 1506 are coupled to input terminals 16, 18, and 20 respectively and respectively receive the red, green, and blue digital signals, and respectively apply said signals to eight-bit digital delay

5

lines 1508, 1510 and 1512, which delay lines have the same delay as is inherent in encoders 22R, 22G, 22B. The red and green delayed signals are then applied to magnitude comparator 1514. The delayed green signal is also applied to magnitude comparator 1518, while the delayed blue signal is applied to magnitude comparators 1516 and 1518. Magnitude comparator 1516 supplies a zero signal to AND gates 1520 and 1522 if the red signal is less than the blue signal. Similarly, comparator 1518 supplies a zero signal to gate 1522 if the green signal is less than the blue signal.

The output signals from gates 1520 and 1522 are called "01" and "02" respectively and are determined in accordance with the following truth table.

| Video signal condition | Output of | | | 01 | 02 |
| --- | --- | --- | --- | --- | --- |
| | 1514 | 1516 | 1518 | | |
| R<G<B | 0 | 0 | 0 | 1 | 0 |
| R<B<G | 0 | 0 | 1 | 0 | 0 |
| B<R<G | 0 | 1 | 1 | 0 | 0 |
| G<R<B | 1 | 0 | 0 | 1 | 0 |
| G<B<R | 1 | 1 | 0 | 0 | 1 |
| B<G<R | 1 | 1 | 1 | 0 | 1 |

The output signals 01 and 02 are present on two-bit bus 1524, and are used to control switch 1526, which switch has input terminals 1528, 1530 and 1532 that receive green, red, and blue steering bits from outputs 26G, 26R, and 26B respectively. An output terminal 1534 supplies to terminal 28S steering bits in accordance with output signals 01 and 02 (as indicated next to terminals 1528, 1530, and 1532), which in turn is in accordance with the R, G or B signal having the largest amplitude.

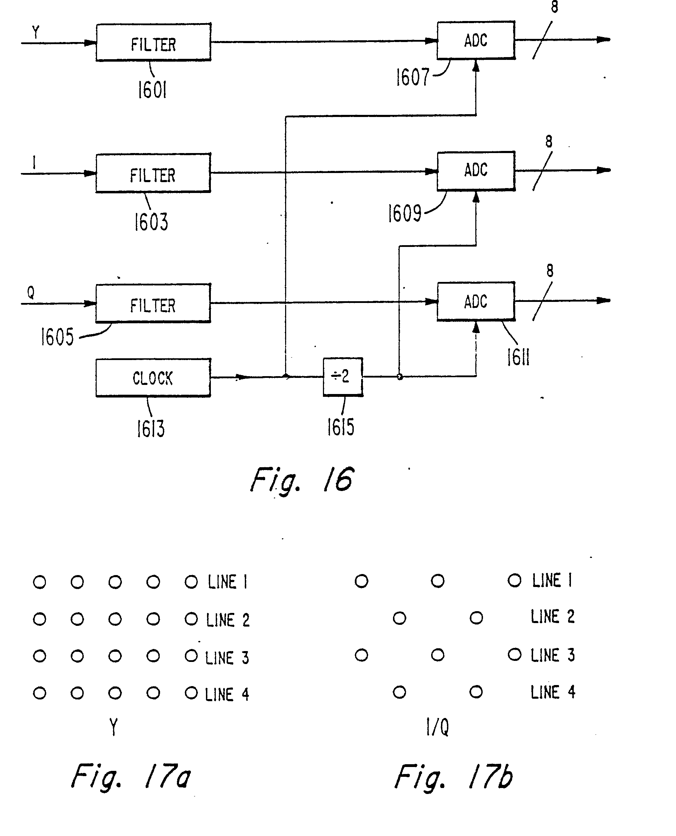

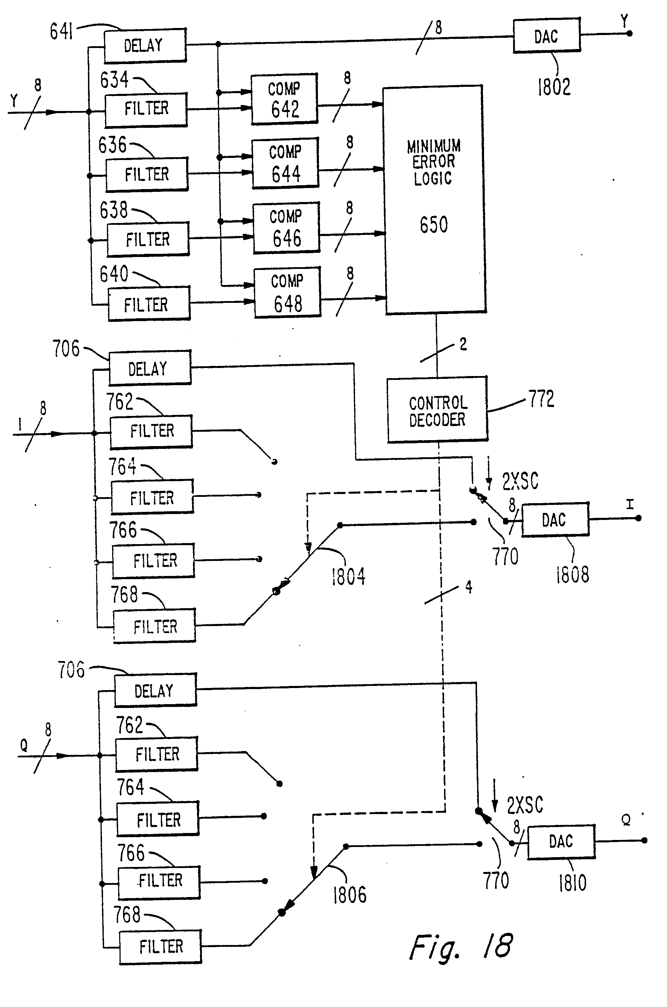

Figure 16 shows another embodiment of an encoder in accordance with the second aspect of the invention. Y, I and Q analog signals are applied to LPFs (low pass filters) 1601, 1603, and 1605 respectively. The output signals from the LPFs 1601, 1603 and 1605 are applied to ADCs (analog to digital converters) 1607, 1609, and 1611, respectively. A clock signal at about four times the color subcarrier frequency (4×SC) is generated by generator 1613 and applied as a sampling signal to ADC 1607 and to divide-by-two frequency divider 1615. The twice subcarrier frequency (2×SC) from divider 1615 is applied as a sampling signal to ADCs 1609 and 1611. The 8-bit output signals from the ADCs comprise digital samples of the analog input signals. The position of the Y signal samples on a scanning raster is shown in Figure 17(a). The exact value of the frequency of the clock signal from generator 1613 is chosen to have an odd number of samples in each scanning line. This choise causes the 2×SC samples of both the I and Q signals to be alternate-line offset with respect to signals of the same type, as shown in Figure 17(b). Other ways of achieving sample offset are known. For example, if an even number of samples in each scanning line is used, then the divided 2×SC clock signal can be "paled", which is a shifting of the phase of the clock signal by 180 degrees from line to line.

In Figure 16 all of the LPFs have a bandwidth cut-off frequency slightly less than 2×SC. However, since the sampling signals to ADC 1609 and 1611 are 2×SC the Nyquist bandwidth limit for the I and Q channels should be about 1×SC. Therefore, aliasing will occur in these channels which will be apparent upon decoding. Thus, the I and Q channel bandwidth allows passage of signals which will be sampled at rates at which aliasing will occur. However, due to the phase offset depicted in Figure 17(b), the aliasing will usually occur in a raster direction other than the direction of the high frequency (highest resolution) information. Thus, it is usually possible to remove the aliasing by filtering in the direction of the alias.

Figure 18 shows a decoder circuit for accomplishing this. The 8-bit 4×SC rate Y signal from Figure 16 is applied to a circuit almost identical to Figure 6 and to DAC (digital to analog converter) 1802 that provides the analog Y output signal. As in Figure 6, equalizing delay line 641, filters 634, 636 and 640, comparators 642, 644, 646 and 648 and minimum error logic 650 all serve to detect in which direction the Y signal has the least resolution (least amount of change) and to provide a 2-bit output signal from logic 650 that conveys this information. This information will be accurate since the sampling rate for the Y signal satisfies the Nyquist criterion, and therefore there is no aliasing in the Y channel.

The 8-bit 2×SC rate I and Q signals are respectively applied to circuits that are essentially the same as the decoder of Figure 7, except that there is now a common control decoder 772. The filters 762, 764, 766 and 768 provide I or Q signals averaged in four directions, and control decoder 772 sets switches 1804 and 1806 to provide an output signal averaged in the direction of least resolution as determined from the Y signal. The signal samples from switches 1804 and 1806 are interpolated between the signal samples from delay lines 706. This filtering removes aliasing in that direction. For example, if the scene is of a picket fence having vertically aligned pickets, there is horizontal information and the aliases in the I and Q signals are in the vertical direction. The alias free Y signal indicates that the direction of least resolution is vertical, and this is the direction in which the filtering is done, i.e. selected as output signals by switches 1804 and 1806. Switches 770 are switched at 2×SC and alternately provide the delay-equalized 2×SC signals from delay lines 706, and the 2×SC now alias-free signals from switches 1804 and 1806. Thus high definition 4×SC rate signals are applied to DACs 1808 and 1810 in channels having a bandwidth equal to the sampling rate, without the adverse effect of alias. Therefore analog Y, I and Q signals are available at the outputs of DACs 1802, 1808 and 1810, respectively. Instead of I and Q signals, other color difference signals, such as B—Y and R—Y, could have been used.

It will be appreciated that other embodiments are possible within the spirit and scope of the first aspect of the invention. For example, transmission path 64 can include a video recorder/reproducer. Further, the steering or control signal or bits can be transmitted in parallel with the transmitted samples for greater speed.

Similarly, other embodiments are possible within the spirit and scope of the second aspect of the invention. For example, the samples could be analog samples, or the invention can be applied to a system where the Y signal is not sampled and the I and Q signals amplitude modulate a color subcarrier.

**Claims**

1. A signal processing apparatus which, for removing aliases from at least one component (I, Q) of a video signal which also has an alias-free component, is characterised by determining means (650, Figure 18) for determining from said alias-free component (Y) a direction of optimum resolution, and averaging means (762—768, 1804, 1806) for averaging said alias-containing component in said direction.

2. An apparatus as claimed in claim 1 for so removing aliases from two alias-containing component signals (I, Q) which comprise color difference signals while said alias-free signal (Y) comprises a luminance signal.

3. An apparatus as claimed in claim 1 or 2 wherein said determining means comprises filter means (634—640) averaging said alias-free signal in a plurality of directions, comparator means (642—648) for forming the absolute values of the differences between said averages and a reference signal, and minimum error logic means (650) for selecting the minimum absolute value.

4. An apparatus as claimed in claim 1, 2 or 3 wherein said averaging means comprises filter means (762—768) for forming averages of said alias-containing components (I, Q) in a plurality of directions, and control decoder means (772) for selecting (1804, 1806) the average in the direction of least resolution.

5. An apparatus as claimed in any proceeding claim including, for providing said alias-containing and alias-free components, means (1609, Figure 16) periodically sampling at least a first signal component (I) of said video signal with offset samples, said first signal component having frequency components that can exceed one half the sampling frequency, and means (1607) for sampling a second signal component (Y) at a frequency at least about twice the maximum of its highest frequency and about twice the sampling frequency of said first component signal.

6. An apparatus as claimed in claim 5 further comprising means (1611) for periodically sampling a third signal component (Q) of said video signal with offset samples, said third signal component having frequency components that can exceed one half the sampling frequency, said first and third signal components (I, Q) comprising color difference signals, said second signal component (Y) comprising a luminance signal.

7. An apparatus for transmitting information signals present in a plurality of information channels, each signal comprising first and second time portions, said apparatus comprising means (22R/G/B, Figure 2; 56Y/I/Q, Figure 5) for transmitting said first portions and for generating a control signal adapted to control the reconstruction of said second portions from the transmitted first portions, characterised by means (30, 60) for transmitting a control signal (SM, SY) from only one channel at a time for controlling the reconstruction in all channels.

8. An apparatus as claimed in claim 7 wherein said channels comprise three channels for red, green and blue color representative television signals (R, G, B) respectively.

9. An apparatus as claimed in claim 7 wherein said channels comprise three channels for luminance (Y) and in-phase and quadrature color television signals (I and Q or R—Y and B—Y) respectively.

10. An apparatus as claimed in claim 7, 8 or 9 wherein said control signal represents the closest match of the untransmitted second portions of selected combinations of said first portions (Figure 2).

11. An apparatus as claimed in any of claims 7—10 wherein said transmitted control signal always is from the same channel (Figure 5).

12. An apparatus as claimed in any of claims 7—10 wherein said generating means (22, Figure 2) generates control signals (SR, SG, SB) in all channels, and further comprising majority logic means (Figure 14) for determining which (SM) of said control signals is transmitted.

13. An apparatus as claimed in any of claims 7—10 wherein said generating means generates control signals (SR, SG, SB) in all channels, and further comprising means (Figure 15) for determining which (SM) of said control signals is transmitted in accordance with which of the information signals (R, G, B) has the greatest amplitude.

7

14. A television sampled transmission system adapted for conveying information relating to a plurality of components of a television signal, comprising:

first transmitting means (22R, Figure 2; 56Y, Figure 5; 641, 654, Figure 6) coupled to a source of samples of a first component (R, Y) of said television signal for transmitting towards a transmission channel (36, 64) a portion of said samples of said first component;

second transmitting means (22B, Figure 2; 56I, Figure 5; 641, 654, Figure 6) coupled to a source of samples of a second component (B, I) of said television signal for transmitting towards said channel a portion of said samples of said second component;

first and second averaging means (634—640, Figure 6, twice) coupled to said first and second transmitting means, respectively, for generating a plurality of averages of said portions of said first and second components; and

control signal generating means (642—650, twice) generating control signals (SR, SB; SY) indicative of which of said averages most closely approximates those portion of said samples which are not transmitted, characterised by:

means (30, 31, 32; 62) for transmitting only one such control signal (SM) over said transmission channel, and

decoding means (Figure 4) responsive to the transmitted samples of said first and second components and to the one transmitted control signal for generating for each of said components a regenerated average signal which is combined (44; 770) with the transmitted samples of the respective first or second component to reconstruct said components.

15. Apparatus for processing information signals in a plurality of information channels (Y, I, Q), comprising:

means (642—648) for comparing samples of said information signals in at least one (Y) of said channels with a plurality of selected combinations (from 634—640) of said samples within said channel; and

means (650) for selecting from among the plurality of selected combinations those combinations which are the best match with the samples being compared; characterised by:

means (762—768) for generating within at least one other (I, Q) of said plurality of information channels new samples derived from the signals in such other channel according to the selected best match combination in said one channel.

## Patentansprüche

1. Signalverarbeitungseinrichtung zur Entfernung von Aliaseeffekten aus mindestens einer Komponente (I, Q) eines Videosignals, welches auch eine aliase-freie Komponente aufweist, gekennzeichnet durch eine Bestimmungseinrichtung (650, Fig. 18) zur Bestimmung einer Richtung optimaler Auflösung aus der aliase-freien Komponente (Y) und einer Mittelungseinrichtung (762 bis 768, 1804, 1806) zur Mittelung der aliaseenthaltenden Komponente in dieser Richtung.

2. Einrichtung nach Anspruch 1 zur Entfernung von Aliaseeffekten aus zwei aliaseenthaltenden Komponentensignalen (I, Q), welche Farbdifferenzsignale enthalten, während das aliase-freie Signal (Y) ein Leuchtdichtesignal enthält.

3. Einrichtung nach Anspruch 1 oder, 2 wobei die Bestimmungseinrichtung eine Filtereinrichtung (634 bis 640) enthält, welche das aliase-freie Signal in mehreren Richtungen mittelt, eine Komparatoreinrichtung (642 bis 648) zur Bildung der Absolutwerte der Differenzen zwischen den Mittelwerten und einem Referenzsignal, und eine Minimumfehler-Logikeinrichtung (650) zum Auswählen des minimalen Absolutwertes.

4. Einrichtung nach Anspruch 1, 2 oder 3, wobei die Mittelungseinrichtung eine Filtereinrichtung (762 bis 768) zur Bildung von Mittelwerten der aliaseenthaltenden Komponente (I, Q) in mehreren Richtungen enthält, und eine Steuerdecodiereinrichtung (772) zur Auswahl (1804, 1806) des Mittelwertes in der Richtung niedrigster Auflösung.

5. Einrichtung nach einem der vorhergehenden Ansprüche, welche zur Erzeugung der aliaseenthaltenden und der aliase-freien Komponenten eine mindestens eine erste Signalkomponente (I) des Videosignals mit versetzten Abtastwerten periodisch abtastende Einrichtung (1609, Fig. 16) enthält, wobei die erste Signalkomponente Frequenzkomponenten aufweist, welche die Abtastfrequenz um die Hälfte übersteigen können, und eine Einrichtung (1607) zum Abtasten einer zweiten Signalkomponente (Y) mit einer Frequenz, die mindestens ungefähr das Zweifasche des Maximums deren höchster Frequenz und ungefähr das Zweifache der Abtastfrequenz des ersten Komponentensignals beträgt.

6. Einrichtung nach Anspruch 5, weiterhin mit einer Einrichtung (1611) zum periodischen Abtasten einer dritten Signalkomponente (Q) des Videosignals mit versetzten Abtastwerten, wobei die dritte Signalkomponente Frequenzkomponenten aufweist, welche die Abtastfrequenz um die Hälfte übersteigen können, wobei die erste und dritte Signalkomponente (I, Q) Farbdifferenzsignale enthalten und die zweite Signalkomponente (Y) ein Leuchtdichtesignal enthält.

7. Einrichtung zur Übertragung von in mehreren Informationskanälen vorliegenden Informationssignalen, wobei jedes Signal erste und zweite Zeitabschnitte enthält, mit einer Einrichtung (22R/G/B, Fig. 2; 56Y/I/Q, Fig. 5) zur Übertragung der ersten Abschnitte und zur Erzeugung eines Steuersignals, welches zur Steuerung der Rekonstruktion der zweiten Abschnitte aus den übertragenen ersten Abschnitten geeignet ist, gekennzeichnet durch eine Einrichtung (30, 60) zur Übertragung eines Steuersignals (SM, SY) von nur einem Kanal zu einer Zeit zur Steuerung der Rekonstruktion in allen Kanälen.

8. Einrichtung nach Anspruch 7, bei der die Kanäle drei Kanäle für Fernsehsignale (R, G, B), die rote, grüne bzw. blaue Farbe repräsentieren, enthalten.

9. Einrichtung nach Anspruch 7, bei der die Kanäle drei Kanäle für Leuchtdichte- (Y) und In-Phase- bzw. Quadratur-Farbfernsehsignale (I und Q oder R—Y und B—Y) enthalten.

10. Einrichtung nach Anspruch 7, 8 oder 9, bei der das Steuersignal die genaueste Übereinstimmung der nicht übertragenen zweiten Abschnitte mit ausgewählten Kombinationen der ersten Abschnitte repräsentiert (Fig. 2).

11. Einrichtung nach einem der Ansprüche 7 bis 10, bei der das übertragene Steuersignal immer aus demselben Kanal kommt (Fig. 5).

12. Einrichtung nach einem der Ansprüche 7 bis 10, bei der die Erzeugungseinrichtung (22, Fig. 2) Steuersignale (SR, SG, SB) in allen Kanälen erzeugt, und die weiterhin eine Majoritäts-Logikeinrichtung (Fig. 14) zum Bestimmen, welches (SM) der Steuersignale übertragen wird, enthält.

13. Einrichtung nach einem der Ansprüche 7 bis 10, bei der die Erzeugungseinrichtung Steuersignale (SR, SG, SB) in allen Kanälen erzeugt, und die weiterhin eine Einrichtung (Fig. 15) zur Bestimmung, welches (SM) der Steuersignale entsprechend dem der Informationssignale (R, G, B) mit der größten Amplitude übertragen wird, enthält.

14. Fernsehabtastwertübertragungssystem, das zur Übertragung von Information, die sich auf mehrere Komponenten eines Fernsehsignals bezieht, geeignet ist, mit:

einer ersten Übertragungseinrichtung (22R, Fig. 2; 56Y, Fig. 5; 641, 654, Fig. 6), die mit einer Quelle von Abtastwerten einer ersten Komponente (R, Y) des Fernsehsignals gekoppelt ist, zur Übertragung eines Teiles der Abtastwerte der ersten Komponente zu einem Übertragungskanal (36, 64);

einer zweiten Übertragungseinrichtung (22B, Fig. 2; 56I, Fig. 5; 641, 654, Fig. 6), die mit einer Quelle von Abtastwerten einer zweiten Komponente (B, I) des Fernsehsignals gekoppelt ist, zur Übertragung eines Teiles der Abtastwerte der zweiten Komponente zu dem Kanal;

einer ersten und einer zweiten Mittelungseinrichtung (634 bis 640, Fig. 6, zweifach), die mit den ersten bzw. zweiten Übertragungseinrichtung gekoppelt sind, um mehrere Mittelwerte der Teile der ersten und der zweiten Komponente zu bilden;

einer ein Steuersignal erzeugenden Einrichtung (642—650, zweifach) zum Erzeugen von Steuersignalen (SR, SB; SY), welche die Mittelwerte angeben, die dem Teil der Abtastwerte, der nicht übertragen wird, am besten angenähert sind, gekennzeichnet durch:

eine Anordnung (30, 31, 32; 62) zur Übertragung nur eines solchen Steuersignals (SM) über den Übertragungskanal, und

eine Decodiereinrichtung (Fig. 4), die auf die übertragenen Abtastwerte der ersten und der zweiten Komponente und das eine übertragene Steuersignal anspricht, um für jede der Komponenten ein regeneriertes Mittelwertsignal zu erzeugen, das mit den übertragenen Abtastwerten der ersten bzw. der zweiten Komponente kombiniert wird (44; 770), um die Komponenten zu rekonstruieren.

15. Einrichtung zur Verarbeitung von Informationssignalen in mehreren Informationskanälen (Y, I, Q), mit:

einer Einrichtung (642 bis 648) zum Vergleichen von Abtastwerten der Informationssignale in mindestens einem (Y) der Kanäle mit mehreren ausgewählten Kombinationen (aus 634 bis 640) der Abtastwerte in dem betreffenden Kanal; und

eine Einrichtung (650) zur Auswahl derjenigen Kombinationen aus den mehreren ausgewählten Kombinationen, welche die beste Übereinstimmung mit en verglichenen Abtastwerten aufweist; gekennzeichnet durch:

eine Einrichtung (762—768), um in mindestens einem anderen (I, Q) der mehreren Informationskanäle neue Abtastwerte zu erzeugen, die entsprechend der ausgewählten Kombination mit der besten Übereinstimmung in dem einen Kanal von den Signalen in einem solchen anderen Kanal abgeleitet sind.

## Revendications

1. Appareil de traitement de l'information qui, pour éliminer les étiquettes équivalentes d'au moins une composante (I, Q) d'un signal vidéo qui comporte également une composante dépourvue d'étiquettes équivalentes, est caractérisé par un moyen de détermination (650, figure 18) pour déterminer à partir de ladite composante (Y) dépourvue d'étiquettes équivalentes une direction de résolution optimum, et par un moyen de calcul de moyenne (762—768, 1804, 1806) pour moyenner ladite composante contenant des étiquettes équivalentes dans ladite direction.

2. Appareil selon la revendication 1 pour ainsi éliminer les étiquettes équivalentes de deux signaux (I, Q) de composante contenant des étiquettes équivalentes qui comprennent des signaux de différence de couleur tendis que le signal (Y) dépourvu d'étiquettes équivalentes comprend un signal de luminance.

3. Appareil selon la revendication 1 ou 2, dans lequel ledit moyen de détermination comprend des moyens de filtre (634—640) moyennant ledit signal dépourvu d'étiquettes équivalentes dans une pluralité de directions, des moyens comparateurs (642—648) pour former les valeurs absolues des différences entre lesdites moyennes et un signal de référence, et un moyen logique d'erreur minimum (650) pour choisir la valeur absolue minimum.

4. Appareil selon les revendications 1, 2 ou 3, dans lequel ledit moyen de calcul de la moyenne comprend des moyens de filtre (762—768) pour former les moyennes de ladite composante (I, Q) contenant des étiquettes équivalentes dans une pluralité de directions, et un moyen décodeur de commande (772) pour choisir (1804, 1806) la moyenne dans la direction de moindre résolution.

5. Appareil selon l'une des revendications précédentes comportant, pour fournir lesdites composantes contenant des étiquettes équivalentes et dépourvues d'étiquettes équivalentes, un moyen (1609), figure 16 échantillonnant périodiquement au moins une première composante de signal (I) dudit signal vidéo avec des échantillons décalés, ladite première composante de signal ayant des composantes de fréquence qui peuvent dépasser la moitié de la fréquence d'échantillonnage, et un moyen (1607) pour échantillonner une seconde composante de signal (Y) à une fréquence au moins environ double du maximum de sa fréquence la plus élevée et environ double de la fréquence d'échantillonnage dudit premier signal de composante.

6. Appareil selon la revendication 5 comprenant en outre un moyen (1611) pour échantillonner périodiquement une troisième composante de signal (Q) dudit signal vidéo avec des échantillons décalés, ladite troisième composante de signal ayant des composantes de fréquence qui peuvent dépasser la moitié de la fréquence d'échantillonnage, lesdites première et troisième composantes de signal (I, Q) comprenant des signaux de différence de couleur, ladite deuxième composante de signal (Y) comprenant un signal de luminance.

7. Appareil pour transmettre des signaux d'information présents dans une pluralité de canaux d'information, chaque signal comprenant des premières et secondes fractions de temps, ledit appareil comprenant des moyens (22R/G/B, figure 2; 56Y/I/Q, figure 5) pour transmettre lesdites premières fractions et pour générer un signal de commande adapté pour commander la reconstitution desdites secondes fractions à partir des premières fractions transmises, caractérisé par des moyens (30, 60) pour transmettre un signal de commande (SM, SY) à partir d'un seul canal à la fois pour contrôler la reconstitution de tous les canaux.

8. Appareil selon la revendication 7, dans lequel lesdits canaux comprennent trois canaux pour des signaux de télévision (R, G, B) représentatifs des couleurs rouge, verte et bleue respectivement.

9. Appareil selon la revendication 7, dans lequel lesdits canaux comprennent trois canaux pour des signaux de luminance (Y) et pour des signaux de télévision couleur en phase et en quadrature (I et Q ou R—Y et B—Y) respectivement.

10. Appareil selon la revendication 7, 8 ou 9, dans lequel ledit signal de commande représente la plus proche approximation des secondes fractions non transmises des combinaisons choisies desdites premières fractions (figure 2).

11. Appareil selon l'une des revendications 7 à 10, dans lequel ledit signal de commande transmis provient toujours du même canal (figure 5).

12. Appareil selon l'une des revendications 7 à 10, dans lequel ledit moyen générateur (22, figure 2) génère des signaux de commande (SR, SG, SB) dans tous les canaux, et comprenant en outre un moyen logique majoritaire (figure 14) pour déterminer lequel (SM) desdits signaux de commande est transmis.

13. Appareil selon l'une des revendications 7 à 10, dans lequel ledit moyen générateur génère des signaux de commande (SR, SG, SB) dans tous les canaux, et comprenant en outre un moyen (figure 15) pour déterminer lequel (SM) desdits signaux de commande est transmis en accord avec celui des signaux d'information (R, G, B) qui a la plus grande amplitude.

14. Système de transmission échantillonnée de télévision adapté pour transmettre une information en relation avec une pluralité de composantes d'un signal de télévision, comprenant:

un premier moyen de transmission (22R, figure 2; 56Y, figure 5; 641, 654, figure 6) couplé à une source d'échantillons d'une première composante (R, Y) dudit signal de télévision pour transmettre vers un canal de transmission (36, 64) une fraction desdits échantillons de ladite première composante;

un second moyen de transmission (22B, figure 2; 561, figures 5; 641, 654, figure 6) couplé à une source d'échantillons d'une seconde composante (B, I) dudit signal de télévision pour transmettre vers ledit canal une fraction desdits échantillons de ladite deuxième composante;

des premier et second moyens de calcul de moyennes (634—640, figure 6, deux fois) couplés audit premier et second moyens de transmission, respectivement, pour générer une pluralité de moyennes desdites fractions desdites première et seconde composantes; et

des moyens générateurs de signal de commande (642—650, deux fois) générant des signaux de commande (SR, SB; SY) indiquant laquelle desdites moyennes représente l'approximation la plus proche des fractions desdits échantillons qui ne sont pas transmises, caractérisés par:

des moyens (30, 31, 32; 62) pour transmettre seulement un tel signal de commande (SM) par ledit canal de transmission, et

des moyens de décodage (figure 4) sensibles aux échantillons transmis desdites première et seconde composantes et au signal de commande transmis pour générer pour chacune desdites composantes un signal de moyenne régénéré qui est combiné (44; 770) avec les échantillons transmis des première et seconde composantes respectives pour reconstituer lesdites composantes.

15. Appareil pour le traitement de signaux d'information dans une pluralité de canaux d'information (Y, I, Q), comprenant:

10

des moyens (642—648) pour comparer les échantillons desdits signaux d'information dans au moins l'un (Y) desdits canaux avec une pluralité de combinaisons choisies (à partir de 634—640) desdits échantillons à l'intérieur dudit canal; et

un moyen (650) pour choisir parmi la pluralité des combinaisons choisies les combinaisons qui sont les meilleures approximations des échantillons comparés; caractérisé par:

des moyens (762—768) pour générer à l'intérieur d'au moins un autre (I, Q) de ladite pluralité de canaux d'information de nouveaux échantillons dérivés des signaux dans un tel autre canal selon la combinaison choisie qui est la meilleure approximation dans ledit canal.

128  116  (114)  126

124  120  118  130  12  122

R · RED SAMPLES
$S_R$ · RED STEERING BITS

G · GREEN SAMPLES
$S_G$ · GREEN STEERING BITS

B · BLUE SAMPLES
$S_B$ · BLUE STEERING BITS

*Fig. 1* – AN ADAPTIVE COMPONENT SYSTEM

R · RED SAMPLES

G · GREEN SAMPLES
$S_M$ · MAJORITY STEERING BITS

B · BLUE SAMPLES

*Fig. 3* – DATA REQUIRED WITH A SINGLE SET OF STEERING BITS

0 056 402

**Fig. 2 –** AN ADAPTIVE COMPONENT SYSTEM WITH A SINGLE SET OF STEERING BITS

**Fig. 4 –** USE OF MAJORITY STEERING BITS IN RECONSTRUCTION

Fig.5 - USE OF LUMINANCE STEERING BITS IN AN ADAPTIVE COMPONENT SYSTEM

ENCODER

Fig.6

3

DECODER

*Fig. 7*

INPUT FROM 66 — 760 — 10 — 10 — DELAY 706 — 8 — 770 — 782 — 769a — 769b — 769c — OUTPUT TO 70

761 — 8

FILTER 762 — 780

FILTER 764 — 778

FILTER 766 — 776

FILTER 768 — 774

771 FILTER CONTROL BITS

CONTROL DECODER 772

0 056 402

Fig.8

FROM 642 —8—
FROM 644 —8— → MAG. COMP. 882 → "0" IF 642 < 644

FROM 642 —8—
FROM 646 —8— → MAG. COMP. 884 → "0" IF 642 < 646

FROM 642 —8—
FROM 648 —8— → MAG. COMP. 886 → "0" IF 642 < 648

FROM 644 —8—
FROM 646 —8— → MAG. COMP. 888 → "0" IF 644 < 646

FROM 644 —8—
FROM 648 —8— → MAG. COMP. 890 → "0" IF 644 < 648

FROM 646 —8—
FROM 648 —8— → MAG. COMP. 892 → "0" IF 646 < 648

"I" IF 642 LOWEST

OR 894

"0" IF 644 < 642

"I" IF 644 LOWEST

OR 896

"0" IF 646 < 642

"0" IF 646 < 644

"I" IF 646 LOWEST

OR 898

OR 800

OR 802

604
604a
604b
I

650

0 056 402

$127\mu S + 280ns$

632 —— /8 —— [ D.L. ] —— (+) 902 —— /9 —— [ ÷ 2 ] —— /8 —— o TO 642

/8 ——— 900

*Fig.9*

634

904

632 — /8 — [ D.L. ] 1000 — /8 — /8 — [ D:L. ] 1002 — /8 — (+) — /9 — [ ÷ 2 ] — /8 → TO 644

$63.5\mu s + 70ns$       140ns       1004       1006

*Fig.10*

636

632 — /8 — [ D.L. ] 1100 — /8 — /8 — [ D.L. ] 1102 — /8 — (+) — /9 — [ ÷ 2 ] — /8 → TO 646

280ns       $127\mu s - 280ns$       1104       1106

*Fig.11*

638

632 — /8 — [ D.L. ] 1200 — /8 — /8 — [ D.L. ] 1202 — /8 — (+) — /9 — [ ÷ 2 ] — /8 → TO 648

140ns       $127\mu s$       1204       1206

*Fig.12*

640

Fig. 13

Fig.14

Fig.15

Fig. 16

Fig. 17a

Fig. 17b

Fig. 18